# EUROPEAN PATENT APPLICATION

(11) **EP 1 713 062 A2**
(43) Date of publication of application: **18.10.2006**
(21) Application number: 06251986.3
(22) Date of filing: 10.04.2006
(51) Int. Cl.: G11B 5/41

(54) **Integrated tape and data transducer head cleaning device**

(30) Priority: 11.04.2005 US 103797
(71) Applicant: QUANTUM CORPORATION, San Jose, CA 95110 (US)
(72) Inventor: Hoge, David T., Westminster, Colorado 80021 (US)
(74) Representative: Charig, Raymond Julian

(57) **Abstract**

Described herein are integrated cleaning devices for cleaning data tapes and/or data head transducers, tape drives including such cleaning devices, and methods of using these cleaning devices and tape drives including the cleaning devices. Cleaning devices for cleaning data tapes and/or data head transducers may include a base having a passage for a data tape, a data tape cleaner attached within the passage, and a transducer head cleaner attached within the passage.

## Description

### BACKGROUND OF THE INVENTION

### Field of the Invention:

The present invention relates generally to devices for cleaning data tape media and data transducer heads, and associated methods and systems for cleaning data tape media and data transducer heads.

### Description of the Related Art:

Tape media cartridges have proven to be an efficient and effective medium for data storage in computer systems. For example, magnetic tape cartridges generally include a housing containing a tape coated with a magnetic coating that can be used to record large amounts of data. The tape is generally wound around a reel, and may be fed from the cartridge to a data reading or writing device through a hinged door in the surface of the cartridge. Data stored on these cartridges may be read and/or written by a data transducer head (e.g., a read and/or write head) as part of a tape drive.

The accuracy of data transfer may be adversely affected by debris or contamination on the tape or on the data transducer head. The build up of debris may damage the tape, the tape cartridge, and/or the tape drive, or decrease the performance of the tape. Various devices and methods for cleaning transducer heads and magnetic tape have been described. For example, a cartridge housing a dedicated cleaning tape, commonly referred to as a "cleaning cartridge," may be used to clean a tape transducer head. A cleaning cartridge may include a tape that is manufactured with particular mechanical and/or chemical properties that provide increased abrasiveness to clean debris from the transducer head of the drive. However, this method is limited, because it cleans only the transducer head, and does not remove debris from a data tape.

Increased data storage capacity and retrieval performance is a goal of riearly all commercially viable data storage devices and media. In the case of tape media, this has increasingly led to smaller track widths and a decreasing physical separation between the transducer head and the data tape, which exacerbates the effects of debris and contamination on the data tape. Furthermore, even virgin data tape is likely to contain various amounts of debris and contamination such as dust or particles of materials used to make the tape media, (e.g., magnetic coating material).

Typical cleaning devices clean only the transducer head of a tape drive, using a cleaning tape or brush mounted in the tape drive. However, these cleaning devices (e.g., cleaning tapes and brushes) do not remove debris on the data tape within a cartridge. Moreover, removing debris from the transducer head in this fashion may only be a temporary solution, because debris may be displaced from the transducer head to other parts of the tape drive, where it may later contaminate the data tape and/or the transducer head. Debris may also block the sensing holes on a data tape leader, thereby decreasing performance of the data cartridge. Loose debris may accumulate inside these holes, or on other regions of the cartridge or the data tape. Thus, it may be desirable to remove debris from inside of a data cartridge, and from a data tape, before the tape comes into contact with tape path components of a tape drive such as the transducer head.

### BRIEF SUMMARY

Described herein are integrated cleaning devices for cleaning data tapes and/or data head transducers, tape drives including cleaning devices for cleaning data tapes and/or data head transducers, and methods of using cleaning devices for cleaning data tapes and/or data head transducers.

A cleaning device for cleaning a data tape and a data transducer head includes a base having a data tape path for a data tape to follow, a data transducer head cleaner on a first side of the data tape passage, and a data tape cleaner on a second side of the data tape passage. The cleaning device may also include an opening into the data tape passage permitting contact between a data transducer head and the data transducer head cleaner.

In some variations, the cleaning device also includes a second data tape cleaner on another side of the data tape passage. The data transducer head may comprise an abrasive surface, or a brush. The cleaning device may also include a movement guide for guiding the movement of the cleaning device. A movement guide may be a hinge, a slider, a cam, or a pivot. The movement device may be connected to an actuator. For example, the cleaning device may include a pivot connected to a receiver cam mechanism for actuating the movement of the cleaning device.

The base of the cleaning device may include a plurality of wall sections forming the data tape passage. Furthermore, the cleaning device may include a controller for controlling the position of the cleaning device.

Also described herein are cleaning devices for cleaning a data tape and a data transducer head comprising a base having walls forming a passage, a data tape cleaner on one of the walls, a data transducer head cleaner on one of the walls, and a pivot about which the cleaning device may move. The passage is configured to pass a data tape therethrough.

Also described herein are tape drives comprising a data transducer head for reading and writing data on a data tape, and a cleaning device. The cleaning device may include a base having a passage for a data tape to pass therethrough, a data transducer head cleaner on a first side of the passage, a data tape cleaner on a second side of the passage, and a movement guide about which the cleaning device may move.

The tape drive may also include a take-up leader having an opening therethrough for providing the data head transducer cleaner with access to the data transducer head when the take-up leader is within the passageway.

The cleaning device of the tape drive may have operating positions. For example, the cleaning device may include a head cleaning position in which the data transducer head and the data transducer head cleaner contact each other within the passage of the cleaning device. The cleaning device may have a tape cleaning position in which the data tape cleaner contacts a data tape within the passage. The cleaning device may have a running position, in which a data tape within the passage does not contact the data tape cleaner, and the data transducer head cleaner does not contact the data transducer head. The cleaning device may also have a loading position, in which the data transducer head is not within the passage. In some variations, the tape drive comprises a controller for controlling the position of the cleaning device.

Also described herein are methods of cleaning a data transducer head of a tape drive, wherein the tape drive includes a take-up leader having an opening, and a cleaning device includes a passage for a data tape to pass therethrough, a data transducer head cleaner on a first side of the passage and a data tape cleaner on a second side of the passage. The method of cleaning a data transducer may include aligning the data transducer head with the opening through the take-up leader, and contacting the data transducer head with the data transducer head cleaner. The method may also include moving the data transducer head.

Also described herein are methods of cleaning a data tape within a tape drive. The method may include positioning a data tape within the passage of the cleaning device, and contacting the data tape with the data tape cleaner. The method may also include moving the data tape within the passage.

The present invention is better understood upon consideration of the detailed description below, in conjunction with the accompanying drawings and claims.

### BRIEF DESCRIPTION OF THE DRAWINGS

**Figure 1** shows a perspective view of the inside of a tape drive.

**Figure 2A** shows a top view of one variation of a cleaning device.

**Figure 2B** shows a perspective view of the cleaning device shown in Fig. 2A.

**Figure 3** shows a view of a cleaning device within a tape drive, as described herein.

**Figure 4** shows a view of the inside of an exemplary tape drive having a cleaning device as described herein.

**Figure 5** shows a side view of a cleaning device installed within a tape drive, as described herein.

**Figure 6** shows a top view of the inside of a portion of a tape drive having a cleaning device as described herein.

**Figures 7A to 7D** illustrate different positions of a cleaning device installed within a tape drive.

### DETAILED DESCRIPTION

Described herein are cleaning devices for cleaning data tape and data transducer heads. The following description is presented to enable any person of ordinary skill in the art to make and use the invention. Descriptions of specific materials, techniques, and applications are provided only as examples. Various modifications to the examples described herein will be readily apparent to those of ordinary skill in the art, and the general principles defined herein may be applied to other examples and applications without departing from the spirit and scope of the invention. Thus, the present invention is not intended to be limited to the examples described and shown, but is to be accorded a scope consistent with the appended claims.

The cleaning devices described herein may be used to clean a data tape, a data transducers head, or both a data tape and a data transducer head. The cleaning device may be integrated into a tape drive. In some variations, the cleaning device has different positions or formations, in which the cleaning device is positioned to clean the data tape during operation (e.g., reading and/or writing from a data tape) or as part of a separate cleaning cycle. The cleaning device may comprise a controller for controlling cleaning of the data tape or data transducer head.

The cleaning devices described herein may clean any kind of data tape (also referred to as media tape). For example, data tape may be recording tape (e.g., for storing computer data, video data, analog signals or any other type of information that may be stored on a tape). Data tape may comprise magnetic media, optical media, or the like. Data tape may be held in any appropriate device, including a cartridge, a cassette, or the like. Thus, a tape drive as described herein may be compatible with any appropriate data tape or tape storage device.

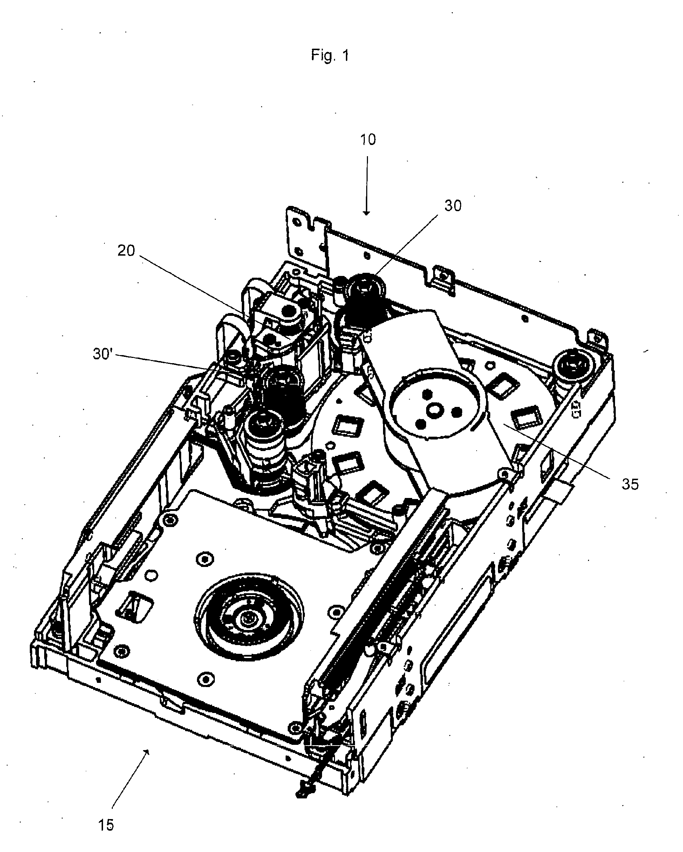

A data transducer head may be any device configured to write and/or read data stored on a data tape. Examples of data transducer heads are described in U.S. Patent No. 4,809,110, U.S. Patent No. 5,055,959, U.S. Patent No. 5,105,322, U.S. Patent No. 5,214,553, and U.S. Patent No. 5,307,217, herein incorporated by reference in their entirety. Fig. 1 shows an example of the inside of a tape drive 10 in which a data transducer head 20 is positioned between two or more tape guides 30, 30' that guide a data transducer tape across the data transducer head so that data may be read or written on the data tape. In the tape drive shown in Fig. 1, a tape media cartridge (not shown) may be loaded into the opening of the tape drive 15, and a data tape be passed through the tape drive and onto a take-up reel 35.

In general, the cleaning devices described herein may comprise a base, a data transducer head cleaner, and a data tape cleaner. The cleaning device may be selectively positioned so that different regions (e.g., the cleaning surfaces) do or do not contact the data transducer head or the data tape. In some variations the cleaning device comprises a pivot about which the cleaning device can be moved to position the cleaning device. In some variations, the cleaning device comprises a controller for coordinating the movement of the cleaning device.

### Base

A cleaning device may include a base on which the different cleaning surfaces are positioned. The base may be any appropriate structure having regions that may secure cleaning surfaces such as a transducer head cleaner and a tape cleaner. In general, the base may be movable or positionable, so that the entire base (including any attached cleaning surfaces) may be moved together. In some variations, the base may move with respect to the data transducer head. The base may be a single unitary structure (e.g., formed from as a single piece), or the base may comprise regions that are attached to each other. In some variations, the base comprises regions that may be moved or positioned relative to other regions of the base.

The base comprises a data tape path. The data tape path may include a passage or passageway through which a data tape may pass, and through which a data transducer may access a data tape. Thus, the passage may have openings permitting the entrance and exit of a data tape, and for permitting a data transducer head to read and/or write data on the data tape. The passage may be of any appropriate size and shape to permit a data tape to pass there through. The passage may be completely enclosed or partially enclosed. The passage may be formed by projections (e.g., walls, arms, paddles, etc.), and may not be enclosed, or it may be enclosed in some regions but not in others.

The data tape passage through the base may change. For example, the path taken by a data tape following the passage through the base may change when the base is moved. Thus, the data tape passage may be a non-contact path, so that a data tape within the path does not contact the cleaning device when the base is in a non-contact position. However, in some positions, the data tape may contact regions of the base that may guide the data tape. The data tape passage through the base may guide the data tape as it passes through the tape cleaner. A data tape passage may comprise a tape-bearing surface or surfaces (e.g., walls, rolling bearings, air bearings, etc.) configured to contact a data tape, or to effect the position of a data tape within the tape path region of the base.

The data tape passage may be formed by structures (e.g., walls) that project from the base. The data tape passage may also be defined by other components located near the base, or adjacent to the cleaning device. Thus, the base of the cleaning device may comprise projections, such as walls, arms or paddles including projections that help form the passage. In some variations, the base comprises walls that project from the base. The projections may comprise attachment sites for connecting to a data transducer head cleaner and/or a data tape cleaner.

The base may include a platform region that underlies the data tape path. Walls (or wall sections) that define a portion of the data tape path may project from the platform region of the base. The walls may be formed as part of the base (e.g., the base and walls may be molded from a single form), or the walls may be separate regions of the base that are attached to a platform region of the base. The walls may be positioned vertically (or at an angle from) the platform region of the base. In some variations, the walls may be smooth or coated in regions where a data tape may contact them. The walls may also serve as attachment sites for one or more data tape cleaners or data transducer head cleaners.

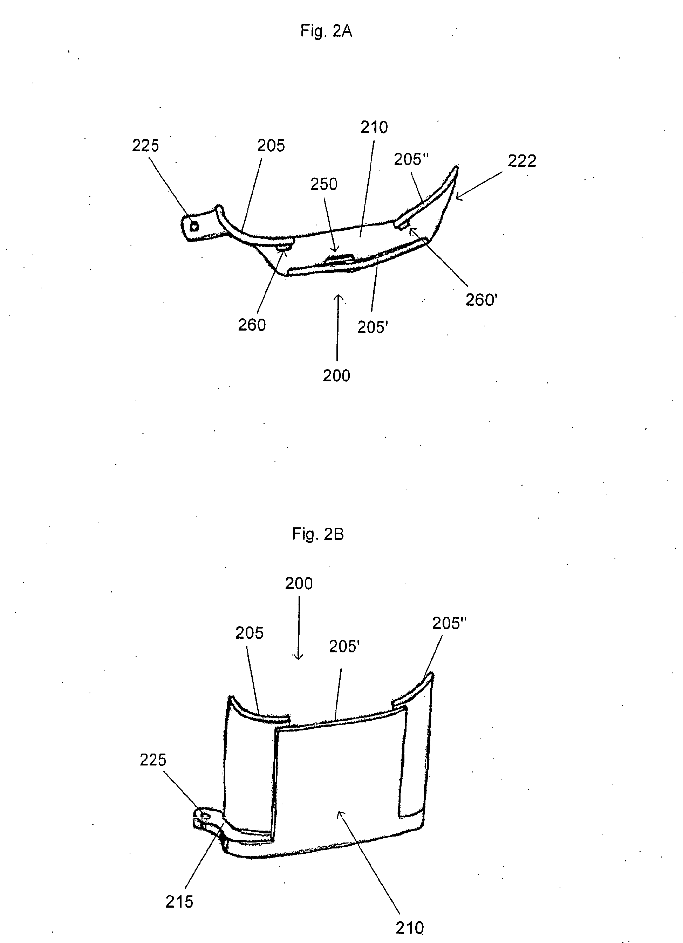

Fig. 2A and 2B shows one variation of a cleaning device 200, having a base 210 with a platform region 215. Fig. 2A shows a top view of the cleaning device shown in a perspective view in Fig. 2B. Three walls 205, 205', 205" form a passage 222, through which a data tape may pass. The entire base region may be moved about a pivot 225, as described further below. Fig. 2A also shows a data transducer head cleaner 250 attached to one of the walls 205', and two data tape cleaners 260, 260' attached to the other walls 205, 205".

### Data Transducer Head Cleaner

A data transducer head cleaner may be connected to the base. In general, a data transducer head cleaner (or "head cleaner") may comprise any appropriate structure or material for cleaning a data transducer head, or for removing debris from the data transducer head. For example, the cleaning surface of the head cleaner may comprise an abrasive surface. The head cleaner may comprise a brush, a scraper, a wiper, or some combination thereof. In some variations, the data transducer head cleaner may comprise a pressure device for cleaning the data transducer head. For example, a vacuum or a blower may be used to clean the data transducer head.

In some variations, the head cleaner includes a brush. Any appropriate brush shape may be used as the head cleaner. The brush may comprise bristles that project outward for contacting a transducer head (forming a cleaning surface). The brush may have bristles that are stiff, compliant, or some mixture thereof. In some variations, the head cleaner may be configured to reduce static, or other electrical problems. For example, the brush may be made from a carbon containing nylon fiber, and electrically connected to an electrical neutral (e.g., ground), so that the transducer head is not charged or electrically damaged when the head is cleaned by the brush. In general, the head cleaner may comprise an electrically conductive material so that the cleaner may be grounded to prevent damage from static or other electrical discharge.

The head cleaner may also comprise an abrasive surface such as a scraper. A scraper may include one or more edges (e.g., scraping surfaces). In some variations, the head cleaner comprises a scraper having a knife edge for scraping a transducer head. In some variations, the head cleaner comprises a scraper having a plurality of edges. A head cleaner may comprise a wiper. For example, a head cleaner may have a flat or angular head for contacting the surface of the transducer head to remove debris.

Generally, a head cleaner may comprise a cleaning surface for removing debris by friction (e.g., by scraping, rubbing, etc), or by having a higher affinity for debris than the transducer head. For example, a head cleaner may comprise an adhesive for removing debris from the transducer head. A head cleaner may also comprise a material capable of trapping debris. For example, the head cleaner may comprise a woven, fibrous, or porous material. The head cleaner may comprise an irregularly-shaped surface. For example, the head cleaner may comprise a gritted surface.

A head cleaner may comprise a chemical cleaner (e.g., a cleaning compound, or cleaning solution). In some variations, a cleaning compound may be used in place of a structure such as an abrasive surface. In some variations, a chemical cleaner is used in addition to an abrasive surface. A transducer head conditioner (e.g., lubricant, etc.) may also be used with the head cleaner.

In some variations, the data transducer head cleaner cleans a transducer head by moving with respect to the data transducer so that the head cleaner moves against the data transducer head. In some variations, the data transducer head moves with respect to the head cleaner. In some variations, both the data transducer head and the head cleaner move with respect to each other. For example, the head cleaner may be positioned against the data transducer head, and the data transducer head may be moved (e.g., laterally or vertically) so that the surface of the data transducer head rubs (or scrapes) against the head cleaner. In some variations, an actuator may be used to move the transducer head against the head cleaner.

The data transducer head, the head cleaner, or both may be moved at any appropriate speed for cleaning. For example, the data transducer head may be moved (or oscillated) many times per second (e.g., greater than 1 Hz, greater than 10 Hz, greater than 50 Hz, greater than 100 Hz, etc.). In some variations, the data transducer head moves in one direction, and the head cleaner moves in another direction (e.g., dual motion), when cleaning the data transducer head.

The data transducer head cleaner may be positioned anywhere on the cleaning device so that it may contact the data transducer head for cleaning. The head cleaner may be attached to the base of the cleaning device so that the head cleaner faces the data transducer head. Thus, the entire base may move so that the head cleaner contacts the data transducer head. In some variations, the head cleaner is attached to a wall projecting from the platform region of the base. For example, when the cleaning device comprises a passage through which a data tape may pass, the passage may have an opening through which the data transducer head can access a data tape within the passage, and a head cleaner may be attached to a side of the passage of the cleaning device, across from the opening into the passage for the data transducer head.

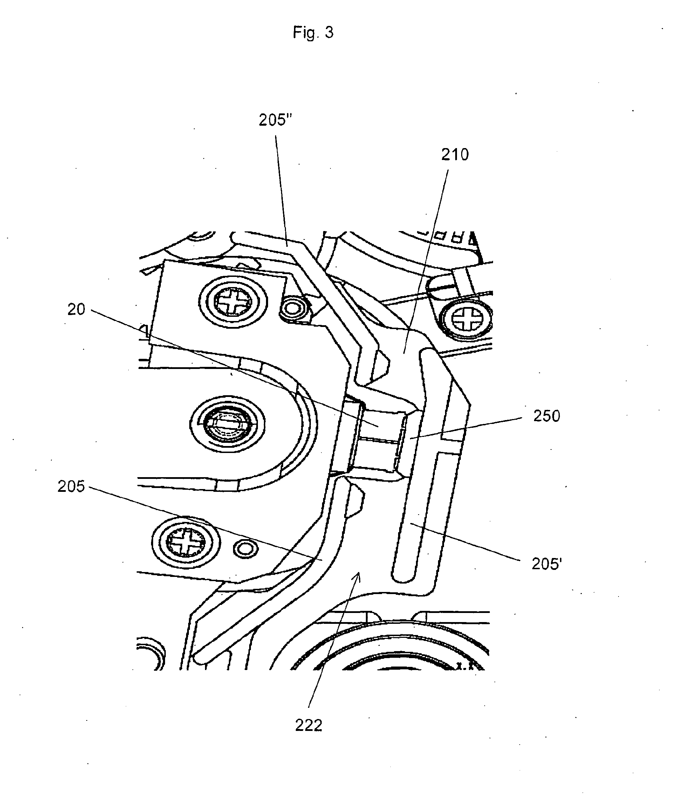

Figs. 2A and Fig. 3 shows examples of a cleaning device having a data transducer head cleaner attached to the side of a passage through the head cleaner. In Fig. 3, the cleaning device is shown with a transducer head 20. The cleaning device base 210 has three wall regions 205, 205', 205", forming a passage for allowing data tape to pass 222. A data transducer head 20 is shown within the passage 222 formed by the wall regions, and the transducer head 20 abuts a data transducer head cleaner 250. The head cleaner 250 is attached to the middle wall 205', so that it may contact the data transducer head 20, as shown.

A head cleaner may be attached to the cleaning device (e.g., the base of the cleaning device) in any appropriate way, so that the cleaning device may clean the transducer head. For example, the head cleaner may permanently or removably attached to the cleaning device. In some variations, the head cleaner may be replaceable. In some variations, the head cleaner is permanently attached, (e.g., by glue or other adhesive), or integral with the base, or a wall region of the base.

The cleaning device (particularly the base and any attached structures such as the head cleaner) may be movable with respect to other drive structures such as the data transducer head. Thus, the position of the head cleaner may vary with respect to the position of the data transducer head. Typically, however the head cleaner is positioned so that it may contact the data transducer head when the cleaning device is moved (e.g., pivoted) into a head cleaning position. In some variations, the head cleaner may be locked into position so that it may clean a transducer head.

A head cleaner may be any appropriate shape or size. For example, the face of the head cleaner 250 shown in Fig. 3 has approximately the size as the face of the data transducer head 20. However, the head cleaner may be smaller or larger. In some variations, the head cleaner may be shaped to conform to the shape of the face of the transducer head. In some variations, the head cleaner may conform to the shape and/or size of a passage through which the head cleaner accesses the data transducer head. For example, when a take-up leader is present in the passage of the cleaning device, the head cleaner may access the transducer head through a hole in the take-up leader, as described further below.

### Data Tape Cleaner

A cleaning device may also comprise a data tape cleaner ("tape cleaner") for cleaning a data tape. A tape cleaner may be attached to the base of a cleaning device (e.g., to a wall of the base portion of the cleaning device). Any appropriate type of tape cleaner that may remove debris from a tape may be used.
For example, brushes, scrapers, wipers, pressure devices (e.g., vacuums or blowers) and combinations thereof may be used. Tape cleaners generally have at least one cleaning surface that is capable of removing debris from a tape. Cleaning surfaces may remove debris from a tape by friction (e.g., by rubbing) or by having a higher affinity for the debris than the tape surface. For example, the cleaning surface may comprise an adhesive for removing the debris from the tape surface. In some variations, non-contact cleaners such as pressure devices may be used. For example, a pressure device may comprise a vacuum for sucking debris from a data tape. In one variation, the tape cleaner may comprise a blower for blowing fluid (e.g., air) over the data tape to clean it.

A cleaning surface may also comprise a material capable of trapping debris. For example, the cleaning surface may comprise a woven, fibrous, or porous material. The cleaning surface may also comprise an irregularly shaped surface. In some variations, the cleaning surface comprises an abrasive surface. In some variations, the cleaning surface comprises a non-abrasive material (e.g., a finely woven material). In some variations, the cleaning surface comprises a cleanser for removing debris or contamination from a tape surface. For example, the cleaning surface may comprise any appropriate solvent (e.g., alcohol, water, etc) for removing debris without damaging the tape. In some variations, the tape cleaner and the head cleaner are the same.

A tape cleaner may be made of any appropriate material, including "soft" materials. For example, a tape cleaner may comprise a felt or cloth material. The tape cleaner may comprise a material that does not damage the data tape. In one variation, the tape cleaner has a cleaning surface that does not harm the surface of a magnetic tape (e.g., by removing a magnetic coating). In some variations, the tape cleaner comprises an electrically conductive material so that the tape cleaner may be grounded to prevent static charge on the tape surface. The tape cleaner may comprise a coating on the cleaning surface. For example, the tape cleaning surface may comprise an anti-static coating. The tape cleaner (and cleaning surface) may comprise a wear-resistant material. For example, the tape cleaner may comprise AlTiC.

A tape cleaner may be a brush, such as a brush having bristles that project outward to contact the tape. Thus, the bristles of the brush may comprise the cleaning surface. The brush may be made of any appropriate material and shape. For example, softer bristles may be used so as not to scratch the surface of the tape.

A tape cleaner may be a wiper, having a flat or angular head for contacting a tape surface. The wiper may comprise any appropriate material for removing debris. In some variations, the wiper may be attached to a reservoir for holding a fluid (e.g., a cleaning solution or lubricant) that may be applied by the wiper during cleaning. In some variations, the wiper may comprise a scraper that scrapes debris off of the surface of a tape. For example, the edge of the wiper may be a tape cleaning surface that may scrape debris from the tape.

Debris may be removed from the tape surface by moving the tape across the tape cleaner's cleaning surface, or by moving the tape cleaner across a tape surface, or both. Thus, the cleaning device may clean a tape surface during the operation of a tape as it moves along the tape path of the tape cartridge. In some variations, the tape is cleaned as it is read or written. In some variations, the tape is cleaned during a special "cleaning run" of the tape drive.

More than one tape cleaner may be used. For example, a single cleaning device may have multiple tape cleaners (e.g., 2, 3, 4 or more tape cleaners). A tape cleaner may clean one side of a data tape, or may be configured to clean both sides of a data tape. In some variations, both sides of a data tape may be cleaned by the cleaning device.

The tape cleaner may be any appropriate size. For example, the tape cleaner may be larger or smaller than the width of a tape. In one variation, the tape cleaner is long and narrow, so that the entire surface of a tape may contact a tape cleaner as the tape moves across the tape cleaner.

A tape cleaner may be attached to the base of the cleaning device either permanently or removably. Thus, a tape cleaner may be attached to the base of a cleaning device so that the tape cleaner is positioned in the passage formed through the base. Fig. 2A shows an example of a cleaning device having two tape cleaners 260, 260' attached to base walls 205, 205" projecting from the platform region 215 of the base 210. At least one side of a tape in the passage 222 of the base 210 may be cleaned by the tape cleaners mounted on the base (e.g., the side of the tape that is read by the transducer head). The tape cleaners may be moved to contact the base region by moving the cleaning device. Furthermore, although cleaning devices having both a tape cleaner and a head cleaner are described, cleaning device may comprise a base and only tape cleaners or only a head cleaner.

### Movement Guide (Pivot)

The cleaning device may be movable. Thus the tape cleaner may comprise a number of different operational positions for cleaning a data tape, the data transducer head. For example, the cleaning device may comprise a head cleaning position, a tape cleaning position, a running position, and a loading position. The cleaning device may include a movement guide, for guiding the movement of the cleaning device, particularly as it is positioned within a tape drive. A movement guide may comprise a track, a channel (e.g. a cam), a hinge, a pivot, etc. The movement guide may also comprise a lock or locks for holding the cleaning device in a position.

In general, the movement guide may be any component that guides the motion or position of the cleaning device, particularly the base of the cleaning device, so that the cleaning device may operate on a tape and/or a transducer head. For example, Figs. 2A and 2B show a cleaning device having a pivot channel 225, about which the cleaning device may be moved (e.g., in rotation). Thus, the cleaning device may be moved out of the way of a data tape, or the cleaning device may be moved to contact (e.g., to clean) a data tape with the tape cleaner(s), or the cleaning device may be moved so that the head cleaner contacts the transducer head.

The cleaning device may be moved by any appropriate actuator. For example, the cleaning device may be driven by an actuator that moves the movement guide. In one variation, a cleaning device may be moved about a pivot by a receiver cam mechanism, when the receiver cam mechanism is connected to the pivot of the cleaning device. The receiver cam may also actuate different parts of a tape drive (e.g., the take-up leader, etc.).

The cleaning device may also include stops (or locks) for holding the cleaning device in one or more positions (e.g., a cleaning position, loading position, or running position, as described below). In some variations, the stops are stops of the cleaning device movement guide, in which the movement guide secures the cleaning device in a position (e.g., by locking the position of the pivot).

Furthermore, the motion of the cleaning device may be controlled by a controller, that may be a dedicated motion controller for the cleaning device, or it may be a part of a tape drive controller configured to control other aspects of the operation of a tape drive. The controller may also control the operation of other aspects of a tape drive (for example, the movement or position of the data transducer head).

A controller may be used to select the position, the movement (e.g., the speed of movement, the direction of movement, etc.), or to lock the cleaning device into a position. In some variations, the controller receives input from the cleaning device. For example, the controller may receive information about the current position or status of the cleaning device with respect to the data tape, transducer head, or the like. The controller may also receive information from the tape drive (e.g., a master controller), or from a user. Furthermore, the controller may also provide output describing the operation of the cleaning device, or the status of the cleaning device (e.g., its position or condition).

### Tape Drive

The cleaning devices described herein may be included into a tape drive. Thus, a tape drive may include a cleaning device having a base with a passage for a data tape, a head cleaner attached to the base, and a tape cleaner attached to the base. The tape drive may also include a data transducer head positioned adjacent to the cleaning device, so that the cleaning device may be moved into position with respect to the cleaning device.

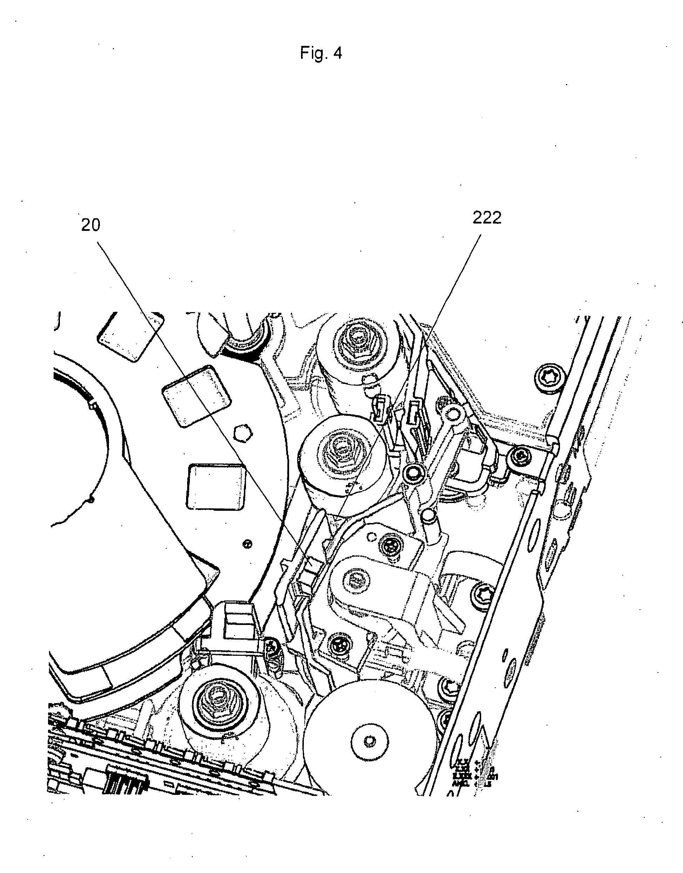

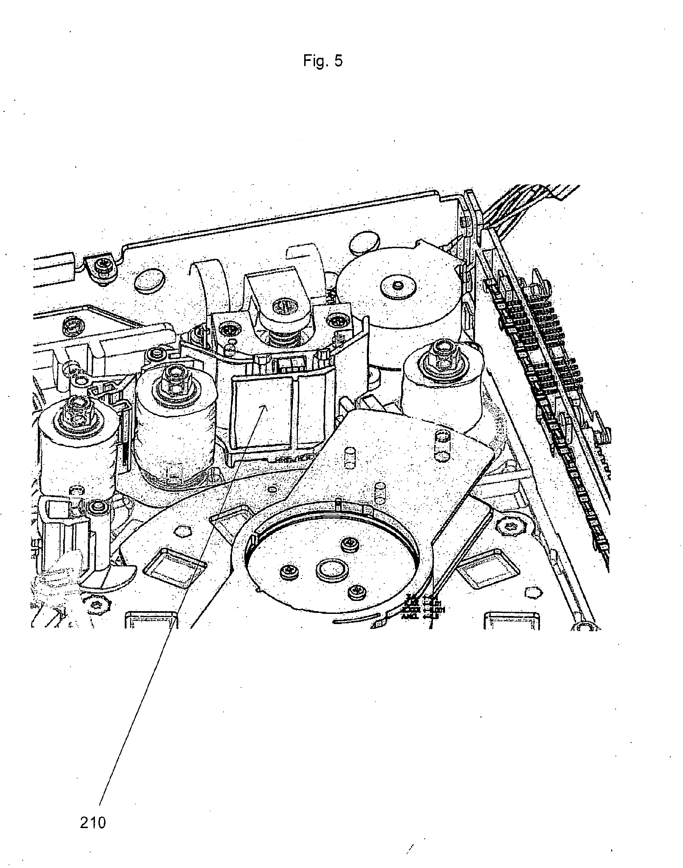

Figs. 4, 5, and 6 show different views of a cleaning device positioned within a tape drive. Fig. 4 shows a view of the inside of a tape drive having a cleaning device as described herein. The base of the cleaning device 210 is shown having three walls forming a passage 222. A side view of the same tape drive and cleaning device is shown in Fig. 5. In Figs. 4, 5 and 6, the cleaning device has a passage configured to pass a data tape. However, when the data tape is not present (e.g., has not been loaded) in the tape drive. A take-up leader (not shown) may be present in the passage when a data tape is not loaded. Thus, when a data cartridge (or other appropriate data device, e.g., a cassette) is loaded into the tape drive, the take-up leader may draw the data tape through the cleaning device, and past the transducer head where data may be written or read from the data tape.

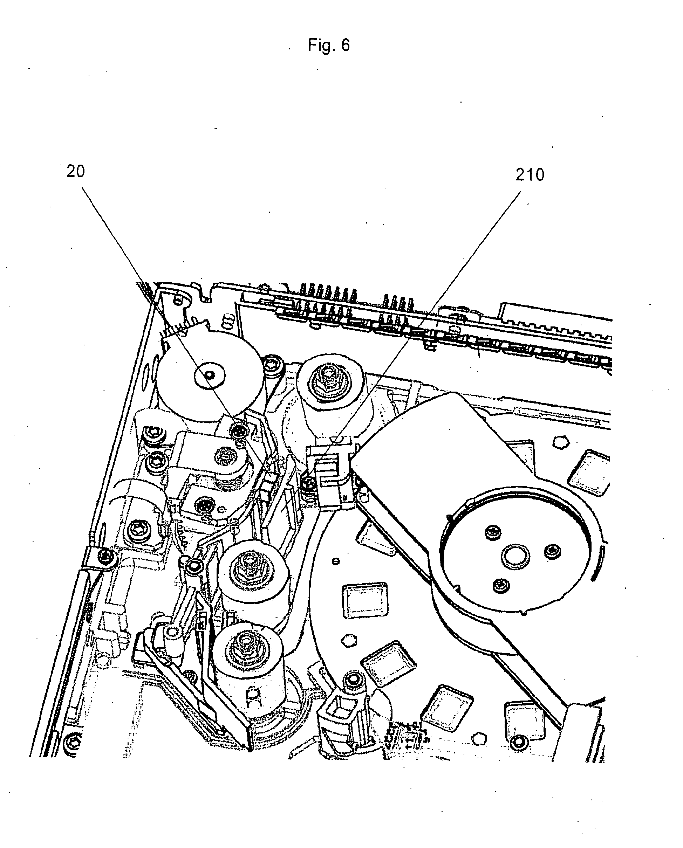

A take-up leader may have holes, or passages, though which the head cleaner (or a portion of the head cleaner) may access the data transducer head, as described. Fig. 6 shows a top view of the tape drive, including the cleaning device. In Fig. 6, the data transducer head 20 is positioned opposite to the head cleaner. The base of the cleaning device 210 shown in Figs. 4, 5 and 6 includes walls that are curved and may be used to deflect or guide a data tape (or the take-up leader) as it moves through the cleaning device.

In operation, the cleaning device may be positioned so that the data transducer of the tape drive may be cleaned, or a data tape within the tape drive may be cleaned. Thus, a tape drive including a cleaning device as descried herein may comprise a number of different operational positions.

### Operation of the Cleaning Device

The cleaning device described herein may clean a data tape, a data transducer head, or both. The cleaning device may be controlled by positioning the cleaning device relative to either the data transducer head, or a data tape, or both. When the cleaning device is included as part of a tape drive, the cleaning device may have different positions relative to the data tape and transducer head.

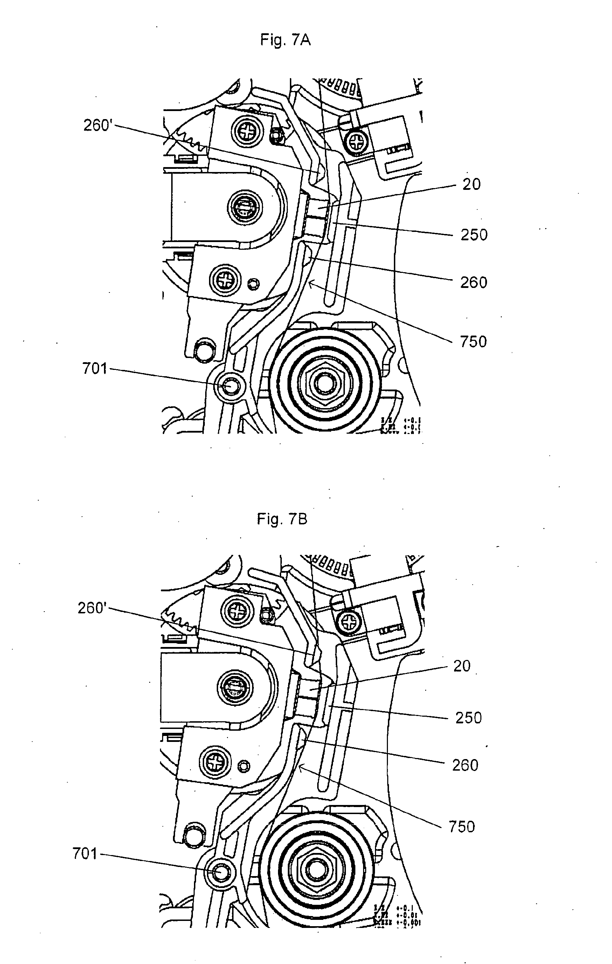

Figs. 7A to 7D show a tape drive including a cleaning device, and illustrate four examples of operational positions for the cleaning device within the tape drive, including: a running position; a tape cleaning position; a loading position; and a head cleaning position. The cleaning device shown in Figs. 7A to 7D has two tape cleaners 260, 260', one head cleaner 250, and a base having a passage for a data tape to pass through. The cleaning device may be positioned so that the tape drive's transducer head 20 can enter the passage, where it may read and/or write a data tape, or may be cleaned by the head cleaner.

Fig. 7A shows a tape drive having a cleaner in the running position, where the tape cleaner 260 does not contact a data tape 750, and the head cleaner 250 does not contact the data transducer head. Thus, a tape may pass within the passage of the cleaning device without contacting the data tape cleaner. In some variations, the cleaning device does not contact a data tape at all when the cleaning device is in the running position. In some variations, the cleaning device may guide the data tape so that it may be read and/or written by the transducer head. For example, the data tape may be guided by the cleaning device by a roller, air bearing, or guide surface of the cleaning device.

The running position of the cleaning device shown in Fig. 7A is a non-contact position, and may be the normal operating position of the cleaning device when data is being written and/or read from a data tape. In some variations, the data tape may be cleaned as it is being read and/or written by the data transducer head.
For example, Fig. 7B shows a cleaning device in a tape cleaning position, in which the data tape cleaners 260, 260' of the cleaning device contact the data tape 750 as it runs across the transducer head 20 of the tape drive.

In the variation of the cleaning device shown in Fig. 7A to 7D, the cleaning device may be transitioned between the running position shown in Fig. 7A and the tape-cleaning position shown in Fig. 7B by moving (e.g., pivoting) the cleaning device about a pivot 701. As described above, a cleaning device may be shifted (and locked) into different operational positions by moving the cleaning device using a movement guide. In addition to moving the cleaning device to put it into an operational position, the cleaning device may be moved to help clean a data tape or a transducer head. For example, the entire cleaning device may be moved, or a portion of the cleaning device may be moved so that head cleaner rubs against the data head, or so that the tape cleaner rubs against a data tape. Thus, the cleaning device (or portions of the cleaning device) may move in any appropriate direction. In Figs. 7A to 7D, the cleaning device is rotated about a pivot 701, towards or away from the transducer head 20, however in some variations, at least a portion of the cleaning device (e.g., the head cleaner or the data tape cleaner) may also move in another direction, e.g., up and down, side-to-side, etc.

The tape cleaning position may comprise any position in which the data tape contacts the data tape cleaner of the cleaning device. In the tape cleaning position shown in Fig. 7B, only the two data tape cleaners 260,260' of the cleaning device contact the data tape 750, however other portions of the cleaning device (e.g., tape guides) may contact the data tape as well. Furthermore, the data tape is shown interacting with the data transducer head in Fig. 7B, so that data may be read and/or written from the data tape as it is being cleaned. In some variations, the data tape does not contact or interact with the transducer head when the data tape is being cleaned by the cleaning device.

Fig. 7C shows the cleaning device in a loading position, in which the data transducer head is not within the passage. In Fig. 7C, the cleaning device may transition to a loading position by rotating even further clockwise about the pivot 701 from the running position. The loading position may be useful for loading or unloading a data tape, because the data tape, or a take-up leader that may attach to a data tape, is separated from the sensitive transducer tape head. In some variations, the data tape or take-up leader passes through the passage of the cleaning device. Thus, the data tape may be guided away from the transducer tape head when the transducer tape head is not present in the passage.

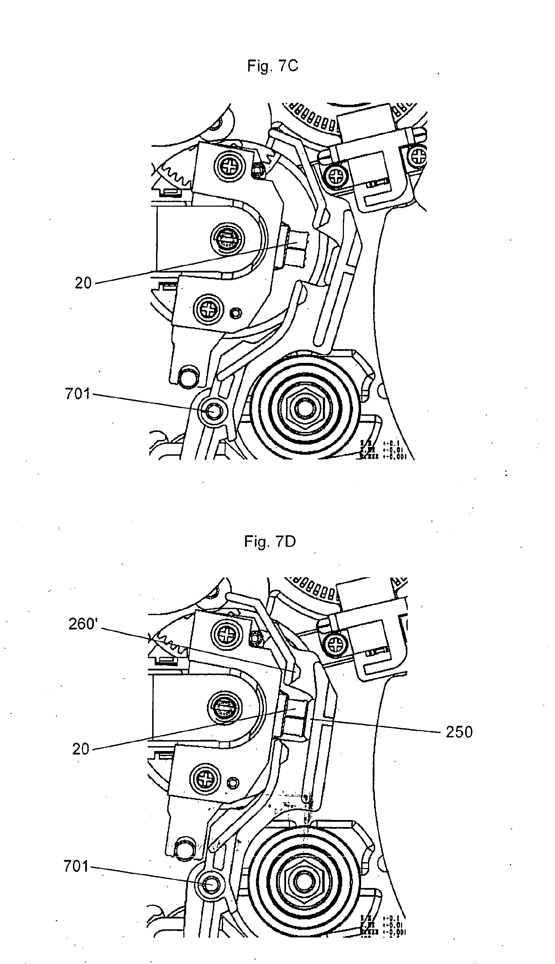

Fig. 7D shows a cleaning device in a head cleaning position. In the head cleaning position, the data transducer head 20 contacts the head cleaner 250. In Fig. 7D, the data tape is not shown in the passage of the cleaning device. In some variations, a take-up leader may be present within the passage, and the head cleaner may contact the transducer head in the passage of the cleaning device through an opening in the take-up leader. The transducer head may be cleaned when the head cleaner brushes, scrapes, or otherwise contacts the transducer head. For example, the transducer head may be moved against the head cleaner by an actuator that controls the position of the transducer head

The cleaning device may be transitioned to the head cleaning position by moving the cleaning device counterclockwise about the pivot 701; until the head cleaner 250 contacts the transducer head 20, as shown. As described above, the movement of the cleaning device between different operational positions may be controlled by a controller. The same controller may be integrated with the operation of the tape drive.

A data transducer head of a tape drive may be cleaned by the cleaning device described herein. The data transducer head may be cleaned by first aligning the transducer head with an opening through a take-up leader of the tape drive. The transducer head may then be contacted by the data transducer head cleaner of a cleaning device. For example, the cleaning device may be moved (e.g., pivoted) into position using the movement guide. A controller may be used to control the movement. Once the data transducer head is positioned adjacent to (or abutting) the head cleaner, the transducer head may be moved to clean the transducer head. In some variations, the head cleaner may be moved (e.g. vertically) to clean the transducer head.

A data tape may be cleaned using a cleaning device as described herein. A data tape may be positioned within the passage of a cleaning device (e.g., within the base of the cleaning device), and contacted by a data tape cleaner, located on one side of the passageway of the cleaning device. In one variation, the data tape may be cleaned by running the data tape against the data tape cleaner. In one variation, the tape cleaner may be moved against the data tape.

The above detailed description is provided to illustrate exemplary embodiments and is not intended to be limiting. For example, any of the features of an embodiment may be combined with some or all of the features of other embodiments. It will be apparent to those skilled in the art that numerous modifications and variations within the scope of the present invention are possible. Throughout this description, particular examples have been discussed, including descriptions of how these examples may address certain disadvantages in related art. However, this discussion is not meant to restrict the various examples to methods and/or systems that actually address or solve the disadvantages. Accordingly, the present invention is defined by the appended claims and should not be limited by the description herein.

## Claims

1. A cleaning device for cleaning a data tape and a data transducer head, the device comprising:
a base having a data tape passage for a data tape to follow;
a data transducer head cleaner within the data tape passage; and
a data tape cleaner within the data tape passage.

2. The cleaning device of claim 1, further comprising an opening into the data tape passage permitting contact between a data transducer head and the data transducer head cleaner.

3. The cleaning device of claim 1, further comprising a second data tape cleaner on within the data tape passage.

4. The cleaning device of claim 1, wherein the data transducer head comprises an abrasive surface.

5. The cleaning device of claim 1, wherein the data transducer head cleaner comprises a brush.

6. The cleaning device of claim 1, further comprising a movement guide for guiding the movement of the cleaning device.

7. The cleaning device of claim 6, wherein the movement guide is a pivot.

8. The cleaning device of claim 7, wherein the pivot is connected to a receiver cam mechanism for actuating the movement of the cleaning device.

9. The cleaning device of claim 1, wherein the base comprises a plurality of wall sections forming the data tape passage.

10. The cleaning device of claim 1, further comprising a controller for controlling the position of the cleaning device.

11. A cleaning device for cleaning a data tape and a data transducer head, the device comprising:
a base having walls forming a passage, the passage configured to pass a data tape therethrough;
a data tape cleaner on one of the walls;
a data transducer head cleaner on one of the walls; and
a pivot about which the cleaning device may move.

12. A tape drive comprising:
a data transducer head for reading and writing data on a data tape;
a cleaning device comprising:
a base having a passage for a data tape to pass therethrough;
a data transducer head cleaner within the passage;
a data tape cleaner within the passage; and
a movement guide about which the cleaning device may move.

13. The tape drive of claim 12, wherein the cleaning device comprises a head cleaning position in which the data transducer head and the data transducer head cleaner contact each other within the passage of the cleaning device.

14. The tape drive of claim 12, further comprising a take-up leader having an opening therethrough for providing the data head transducer cleaner with access to the data transducer head when the take-up leader is within the passageway.

15. The tape drive of claim 12, wherein the cleaning device comprises a tape cleaning position in which the data tape cleaner contacts a data tape within the passage.

16. The tape drive of claim 12, wherein the cleaning device comprises a running position, in which a data tape within the passage does not contact the data tape cleaner, and the data transducer head cleaner does not contact the data transducer head.

17. The tape drive of claim 12, wherein the cleaning device comprises a loading position, in which the data transducer head is not within the passage.

18. The tape drive of claim 12, further comprising a controller for controlling the position of the cleaning device.

19. A method of cleaning a data transducer head of a tape drive, wherein the tape drive includes a take-up leader having an opening, and a cleaning device comprising:
a passage for a data tape to pass therethrough;
a data transducer head cleaner within the passage;
a data tape cleaner within the passage;
the method comprising:
aligning the data transducer head with the opening through the take-up leader; and
contacting the data transducer head with the data transducer head cleaner.

20. The method of claim 19, further comprising moving the data transducer head.

21. A method of cleaning a data tape within a tape drive, wherein the tape drive includes a cleaning device comprising:
a passage for a data tape to pass therethrough;
a data transducer head cleaner within the passage;
a data tape cleaner within the passage;
the method comprising:
positioning a data tape within the passage of the cleaning device; and
contacting the data tape with the data tape cleaner.

22. The method of claim 21, further comprising moving the data tape within the passage.
